# EUROPEAN PATENT APPLICATION

(11) **EP 3 098 791 A1**
(43) Date of publication of application: **30.11.2016**
(21) Application number: 16171471.2
(22) Date of filing: 26.05.2016
(51) Int. Cl.: G07G 1/00

(54) **MERCHANDISE INFORMATION PROCESSING APPARATUS THAT CONFIRMS MERCHANDISE CODE SCANNING**

(30) Priority: 29.05.2015 JP 2015110811
(71) Applicant: Toshiba TEC Kabushiki Kaisha, Tokyo 141-0032 (JP)
(72) Inventor: TAKENO, Yuishi, Shinagawa-ku, Tokyo 141-8562 (JP); KAKINO, Tomonari, Shinagawa-ku, Tokyo 141-8562 (JP)
(74) Representative: Takeuchi, Maya

(57) **Abstract**

A merchandise information processing apparatus includes a motion detector and a processor. The motion detector is configured to detect motion of merchandise that is being moved by a user for detection of an identification code placed thereon or a body part of the user that is holding the merchandise. The processor is configured to access a registration list of merchandise that has been registered through detection of identification codes, and to determine whether or not the merchandise that has undergone the motion detection is included in the registration list.

## Description

### FIELD

Embodiments described herein relate generally to a merchandise information processing apparatus.

### BACKGROUND

Retail stores such as supermarkets employ a self-checkout system using a self-register (self-checkout terminal), so as to conduct efficient business by reducing the number of personnel engaged in a check out process. The self-register is operated by a customer who purchases merchandise. The customer operates the self-register to perform merchandise registration processing through which the merchandise to be purchased is registered, and payment processing through which payment for the registered merchandise is made.

Merchandise sale data of the merchandise are input by reading, for example, a barcode attached to the merchandise, using a scanner of the self-register. That is, the customer operates the scanner to read the barcode. Accordingly, when the customer is not familiar with use of the self-register, the customer may carry out merchandise that is not properly registered through code scanning. In other words, the customer may carry out merchandise without payment therefor. To prevent such an issue, the self-checkout system may need to monitor whether or not all merchandise to be purchased is properly registered and payment therefor is completed.

For example, a self-register of the related art includes a weight sensor (meter) in a table on which merchandise that undergoes the code scanning (successfully or not), is placed, and monitors whether or not the merchandise registration is correctly performed, based on a weight of the merchandise placed on the table. The self-register of the related art compares a total weight of the merchandise measured by the weight sensor with a total weight of registered merchandise which is recorded in a database in advance, and detects an error when a difference between the weights is large. If no error is detected when the merchandise that undergoes the code scanning is placed on the table, the customer or the store personnel can confirm that the merchandise has been correctly registered.

However, the confirmation of weight match may take time because weight detected by the weight sensor usually fluctuates right after the merchandise is placed on the table. Further, since the self-register of the related art carries out the confirmation of weight match each time additional merchandise is registered, the total time needed for the self-checkout may significantly increase.

It would be desirable if the self-checkout can be carried out more efficiently.

### DESCRIPTION OF THE DRAWINGS

FIG. 1 illustrates an overview of a merchandise information processing apparatus used for a self-checkout system according to an embodiment.
FIG. 2 is a block diagram of the self-checkout system, which includes a self-register (merchandise information processing apparatus) according to the present embodiment.
FIG. 3 illustrates an example of a registered merchandise list according to the present embodiment.
FIG. 4 illustrates an example of a detection list according to the present embodiment.
FIG. 5 is a flowchart illustrating merchandise registration processing according to the present embodiment.
FIG. 6 is a flowchart illustrating error detection processing according to the present embodiment.
FIG. 7 schematically illustrates a state in which a customer moves merchandise for barcode detection.

### DETAILED DESCRIPTION

An embodiment provides a merchandise information processing apparatus which can perform registration of merchandise to be sold more efficiently.

In general, according to an embodiment, a merchandise information processing apparatus includes a motion detector and a processor. The motion detector is configured to detect motion of merchandise that is being moved by a user for detection of an identification code placed thereon or a body part of the user that is holding the merchandise. The processor is configured to access a registration list of merchandise that has been registered through detection of identification codes, and to determine whether the merchandise that has undergone the motion detection is included in the registration list.

Preferably, the registration list includes one or more entries containing a detection time when an identification code of corresponding merchandise was detected,

According to the present invention, determining whether the merchandise that has undergone the motion detection is included in the registration list includes determining whether, in the registration list, there is a detection time that is between a start time when the merchandise or the body part entered a predetermined detection region of the motion detector and an end time when the merchandise and the body part moved out of the predetermined detection region.

The merchandise information processing apparatus may further comprise: a code detector configured to detect identification codes placed on merchandise, wherein the predetermined detection region overlaps a code detection region of the code detector.

The merchandise information processing apparatus may further comprise: a code detector configured to detect identification codes placed on merchandise; and a storage unit for storing the registration list.

The merchandise information processing apparatus may further comprise a display, wherein the processor is further configured to cause the display to display an error message when it is determined that the merchandise that has undergone the motion detection is not included in the registration list.

The merchandise information processing apparatus may further comprise: a speaker, wherein the processor is further configured to cause the speaker to generate sound indicating an error when it is determined that the merchandise that has undergone the motion detection is not included in the registration list.

The merchandise information processing apparatus may further comprise a camera configured to capture an image of the merchandise moved by the user and the body part of the user holding the merchandise; and a storage unit for storing data of an image captured by the camera. The processor may be further configured to output the data of the image stored in the storage unit to an external device.

The merchandise information processing apparatus may further comprise: a display, wherein the processor is further configured to cause the display to display information of the merchandise that has undergone the motion detection, together with the image captured by the camera.

Preferably, the registration list includes one or more entries containing a detection time when an identification code of corresponding merchandise was detected.

Preferably, determining that the merchandise that has undergone the motion detection is included in the registration list includes determining whether, in the registration list, there is a detection time that is between a start time when the merchandise or the body part entered a predetermined imaging region of the camera and an end time when the merchandise and the body part moved out of the predetermined image region.

According to the present invention, the motion detector may be a motion sensor or, a camera configured to detect the motion of the customer (and the merchandise) based on a video image obtained.

The present invention further relates to a merchandise information processing apparatus, comprising: a camera configured to capture an image of merchandise that is being moved by a user for detection of an identification code placed thereon or a body part of the user that is holding the merchandise; and a processor configured to access a registration list of merchandise that has been registered through detection of identification codes, and to determine whether the merchandise that has undergone the image capture is included in the registration list.

Preferably, the registration list includes one or more entries containing a detection time when an identification code of the corresponding merchandise was detected, and determining that the merchandise that has undergone the image capture is included in the registration list includes determining whether, in the registration list, there is a detection time that is between a start time when the merchandise or the body part entered a predetermined imaging region of the camera and an end time when the merchandise and the body part moved out of the predetermined imaging region.

The merchandise information processing apparatus may further comprise: a code detector configured to detect identification codes placed on merchandise, wherein the predetermined detection region overlaps a code detection region of the code detector.

The merchandise information processing apparatus may further comprise: a code detector configured to detect identification codes placed on merchandise; and a storage unit for storing the registration list.

The merchandise information processing apparatus may further comprise : a display, wherein the processor is further configured to cause the display to display an error message when it is determined that the merchandise that has undergone the image capture is not included in the registration list.

The merchandise information processing apparatus may further comprise: a speaker, wherein the processor is further configured to cause the speaker to generate sound indicating an error when it is determined that the merchandise that has undergone the image capture is not included in the registration list.

The merchandise information processing apparatus may further comprise: a display, wherein the processor is further configured to cause the display to display information of the merchandise that has undergone the image capture, together with an image captured by the camera.

Hereinafter, embodiments will be described with reference to the accompanying drawings.

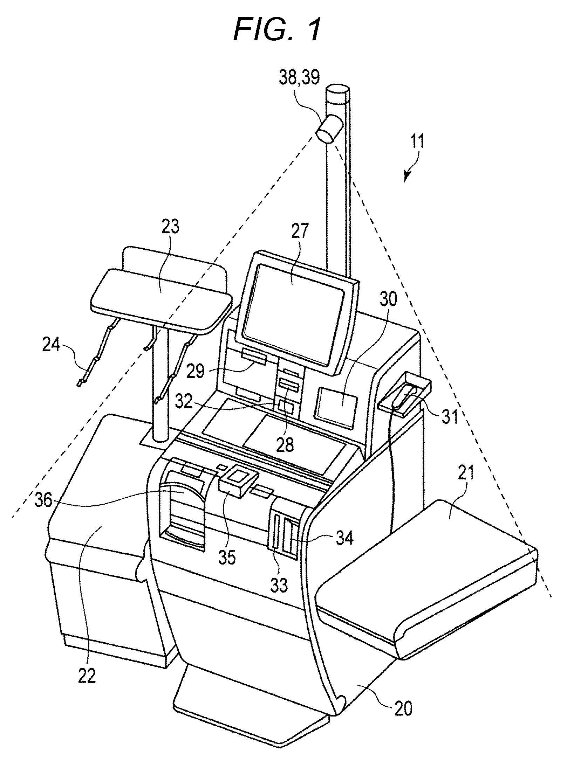

FIG. 1 illustrates an overview of a merchandise information processing apparatus which is used for a self-checkout system according to the present embodiment. The merchandise information processing apparatus illustrated in FIG. 1 functions as a self-register 11 (self-checkout terminal) which executes merchandise registration processing and payment processing according to an operation of a customer who purchases merchandise.

As illustrated in FIG. 1, the self-register 11 includes a body 20 and merchandise placing tables 21 and 22 which are disposed on the right and left of the body 20, respectively. The merchandise placing table 21, which is disposed on the right of the body 20, is a table on which merchandise (not registered) that is going to be purchased by a customer, for example, and is contained in a basket (container), is placed. The merchandise placing table 22, which is disposed on the left of the body 20, is a table on which merchandise that is taken out from the merchandise placing table 21 is placed after a barcode scan is performed.

A temporary stand 23 is provided above the merchandise placing table 22 and is supported by a pillar, and two holding arms 24 separated from each other extend from the temporary stand 23. A shopping bag (plastic bag) is hung on the holding arms 24 in a state of being opened. The temporary stand 23 is used as a place on which the merchandise is temporarily placed before being put into the shopping bag.

In addition, a touch panel 27, a card slot 28, a receipt issue slot 29, a scanner 30, a hand scanner 31, a speaker 32, a bill outlet 33, a bill slot 34, a coin slot 35, and a coin outlet 36 are provided on the body 20. In addition, a motion sensor 38 and a camera 39 are disposed in the periphery of a tip of a pillar which extends from the body 20.

The touch panel 27 includes a display device such as a liquid crystal display (LCD), and a touch sensor. The display device displays a graphical user interface (GUI) screen for selecting matters such as a payment method (cash, card) by a touch operation of a customer, or inputting various kinds of information. In addition, the display device displays a guidance message for informing the customer of an operation method, an information input screen for inputting information on merchandise having no barcode attached, a merchandise registration screen which displays information about merchandise that is read by the scanner 30 or the hand scanner 31 from a barcode, and a calculation screen including information such as a total purchase price, the amount of deposit money, and the amount of change, when payment for the purchase is executed. The touch sensor detects where a customer touches a display surface (operation surface) of the display device, and transmits the touch location to a CPU 40.

A point card or an IC card owned by a customer is inserted into the card slot 28 for payment or accumulation of reward points. The receipt issue slot 29 is a slot from which a receipt printed upon completion of the checkout is issued.

The scanner 30 optically reads the barcode, when the merchandise is held by the customer such that the barcode attached to the merchandise faces the scanner. The hand scanner 31 is operated by the customer, and optically reads the barcode by being moved close to the barcode.

The speaker 32 outputs sound such as warning sound or message voice. The bill outlet 33 is an outlet from which a bill for change is released. The bill slot 34 is a slot into which a bill for payment is inserted. The coin slot 35 is a slot into which a coin for payment is inserted. The coin outlet 36 is an outlet from which a coin for change is released.

The motion sensor 38 detects a motion of an object in a region in which the merchandise is moved by the customer. The motion sensor 38 detects a motion of the merchandise for which barcode scanning is being performed using the scanner 30 or the hand scanner 31.

The camera 39 images the customer who is carrying out merchandise registration and payment. The camera 39 has an imaging range which includes the merchandise placing table 21 and the merchandise placing table 22, for example, as denoted by a dashed line in FIG. 1. That is, a video image of the customer's motion can be obtained while the merchandise placed on the merchandise placing table 21 is taken by the customer, the barcode is scanned by the scanner 30 or the hand scanner 31, and the merchandise is placed on the merchandise placing table 22. The video image obtained using the camera 39 is used when a store manager or a clerk (attendant) intervenes in a checkout situation, for example, when an error occurs during the merchandise registration processing. In addition, by performing predetermined image processing for the video image obtained using the camera 39, the video image can also be used for detecting the motion of the merchandise, instead of the motion sensor 38.

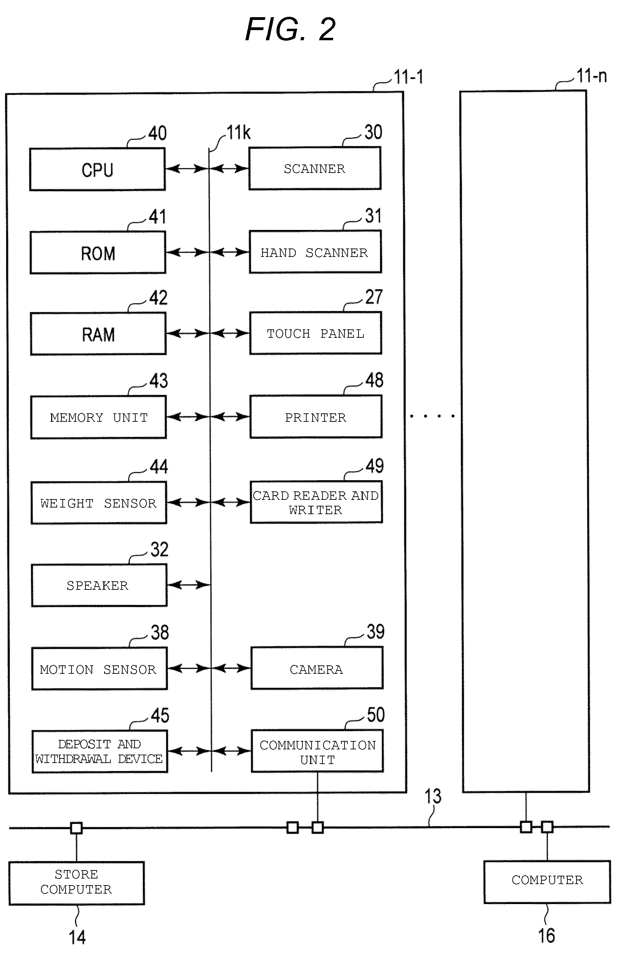

FIG. 2 is a block diagram of the self-checkout system which includes the self-register 11 (merchandise information processing apparatus) according to the present embodiment. Multiple self-registers 11 (11-1, ..., 11-n) are connected to each other through a network such as a local area network (LAN) 13, in the self-checkout system. A different communication network such as the Internet or a wireless LAN can be used for the network, instead of the LAN 13.

In addition, the LAN 13 is connected to a store computer 14, which manages the overall system, and a computer 16, which is used as an attendant terminal by a clerk (attendant). In addition, a POS terminal (not illustrated) that performs merchandise registration processing and payment processing by the operation of the clerk is connected to the LAN 13.

The store computer 14 and the computer 16 (external device) receive data from the self-register 11, and have a function to display a screen which indicates an operation state of the self-register 11. When an error notification from the self-register 11 is received, the store computer 14 and the computer 16 have a function to display a message for notifying the attendant (clerk) of an error on the display. In addition, the store computer 14 and the computer 16 have a function to receive and display the video image of the customer generated by the self-register 11. In addition, the POS terminal can also have a function to receive and display the error notification and the video image from the self-register 11, in the same manner as in the computer 16.

The self-register 11 includes a central processing unit (CPU) 40, a read-only memory (ROM) 41, a random-access memory (RAM) 42, a memory unit 43, a weight sensor 44, the speaker 32, a deposit and withdrawal device 45, the scanner 30, the hand scanner 31, the touch panel 27, a printer 48, a card reader and writer 49, the motion sensor 38, the camera 39, and a communication unit 50 which are connected to each other through a transfer system 11k. The transfer system 11k includes various buses such as a system bus, and various interface circuits which connect the buses to each unit of the self-register 11.

The CPU 40 controls each unit of the self-register 11 to perform various functions of the self-register 11, based on operating systems stored in the ROM 41 and the RAM 42, middleware, and an application program.

Applications executed by the CPU 40 include, for example, a merchandise registration processing program to perform the merchandise registration processing, a payment program to perform the payment processing, and an error detection processing program to perform error detection processing.

The ROM 41 stores a fixed program or data. The ROM 41 may store middleware or an application program. In addition, The ROM 41 may store data for access by the CPU 40 while the CPU 40 performs various processing.

The RAM 42 stores data for access by the CPU 40 when the CPU 40 performs various processing. Furthermore, the RAM 42 stores data which are temporarily used as a so-called work area by the CPU 40 while the CPU 40 performs various processing.

The memory unit 43 retains various programs which are executed by the CPU 40, data for access by the CPU 40 while the CPU 40 performs various processing, or data generated through processing of the CPU 40. For example, an electric erasable programmable read-only memory (EEPROM) (registered trademark), a hard disk drive (HDD), a solid state drive (SSD), or the like can be used as the memory unit 43.

Application programs which are stored in the memory unit 43 include the merchandise registration processing program, the payment processing program, and the error detection processing program.

In addition, a storage unit, e.g., the RAM 42 or the memory unit 43, stores various kinds of data such as, a registered merchandise list that includes registered merchandise data of merchandise that is registered through the merchandise registration process, a detection list that includes motion data about merchandise moved by a customer, which is used for error detection processing, and a weight data list that includes data (for example a set weight, an allowable measurement value, or the like) related to weights of each item of merchandise.

In addition, the memory unit 43 stores data of the video image (video data) obtained using the camera 39. Data of a time stamp indicating, for example, imaging time is added to the video data. It is possible to reproduce video data of a predetermined time period, based on the time stamp.

The weight sensor 44 measures a weight of merchandise placed on the merchandise placing table 22. The weight measured by the weight sensor 44 is used for monitoring whether or not merchandise corresponding to a scanned barcode is correctly registered.

The deposit and withdrawal device 45 includes a mechanism which handles bills and coins that are inserted through the bill slot 34 and the coin slot 35, respectively, and a mechanism which discharges bills and coins to the bill outlet 33 and the coin outlet 36, respectively, based on the control of the CPU 40.

The printer 48 issues a receipt by printing various character strings, images, or the like on receipt paper. For example, a thermal printer, a dot impact printer, or the like can be used as the printer 48.

The card reader and writer 49 have a function to read data recorded in a card and a function to write data into the card. The card may be a payment card such as a credit card, a debit card, an electronic money card, a prepaid card, or the like, or a membership card which is referred to as a member's card, a point card, or the like. Information for identifying a member owning the card is recorded in the member card. The card reader and writer 49 may be a device of any one of a magnetic type, a contact type, or a non-contact type, and may include multiple types of devices.

The communication unit 50 controls communication with an electronic device including the store computer 14 and the computer 16, which are connected through the LAN 13.

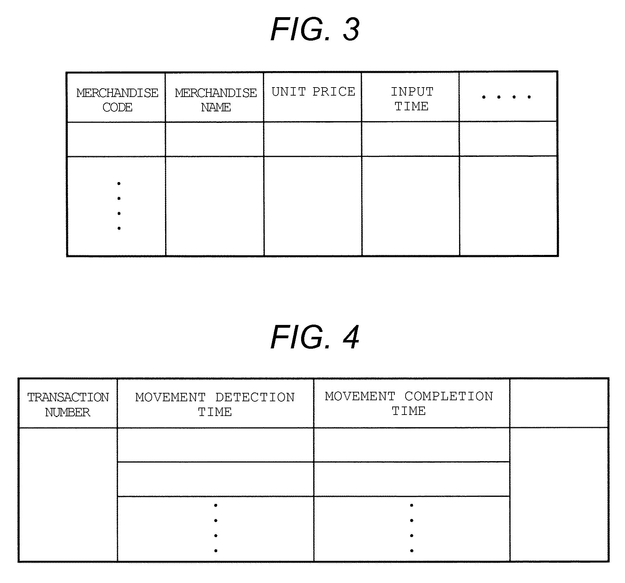

FIG. 3 illustrates an example of a registered merchandise list according to the present embodiment. The merchandise sale data of one customer (one-time payment) is recorded in the registered merchandise list. For example, a merchandise code of registered merchandise which is obtained based on the barcode attached to the merchandise, a merchandise name, unit price, the number of merchandise, and total amount of the merchandise is recorded in each entry of the registered merchandise list. In addition, input time, which is the time when the barcode was read (input) by the scanner 30 or the hand scanner 31, is recorded in each entry of the registered merchandise list for each item of merchandise.

When a motion of placing merchandise on the merchandise placing table 22 is detected by the motion sensor 38, the input time is used to identify the registered merchandise corresponding to the motion.

FIG. 4 illustrates an example of the detection list according to the present embodiment. Each detection time when a motion of merchandise moved by a customer is detected is recorded in the detection list, in association with a transaction number of the customer (purchase transaction). The detection time includes, for example, a movement detection time when an operation of moving merchandise is detected within a predetermined detection range, and movement completion time when the detection of the operation ends. More specifically, the movement detection time may be defined as time when a hand (and an arm) of the customer holding the merchandise enters within a detection range of the motion sensor 38 (or the camera 39), and the movement completion time may be defined as time when the hand (and the arm) of the customer with the merchandise exits the detection range.

When a motion of moving the merchandise is detected, the movement completion time is used to determine whether or not merchandise information corresponding to the motion has been registered. For example, it is determined whether or not there is merchandise that has been registered within a predetermined time period (for example, 2 sec) before the movement completion time, by referring to the input time recorded in the registered merchandise list. When it is determined that there is the merchandise registered within the predetermined time period, it can be determined that the merchandise information corresponding to the motion of the merchandise has been successfully registered.

In addition, the video image of the time between the movement detection time and the movement completion time may be displayed based on the time stamp attached to the video data. That is, the video image of the customer who is scanning the barcode attached to the merchandise using the scanner 30 (or the hand scanner 31) can be displayed for each item of merchandise. Not only the video image (moving image) but also a still image captured during the time between the movement detection time and the movement completion time may be displayed.

Next, an operation of the self-register 11 according to the present embodiment will be described.

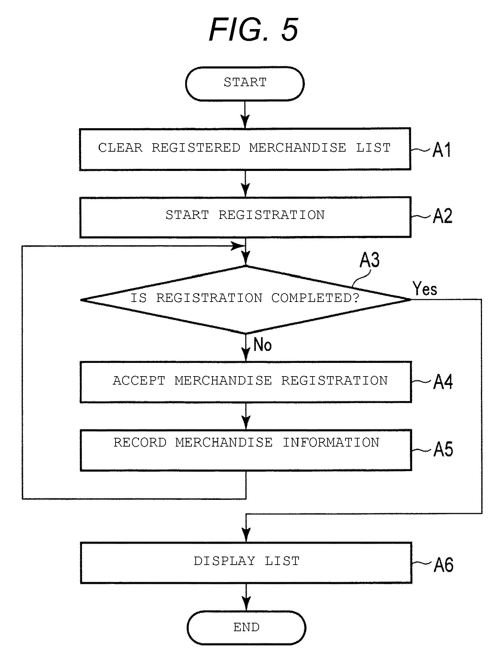

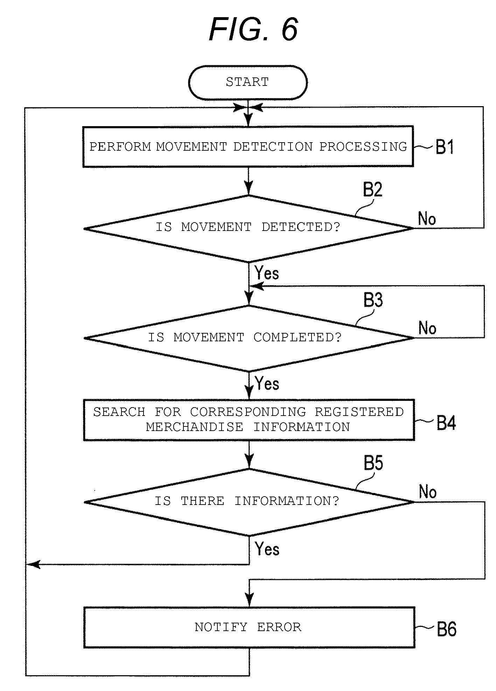

FIG. 5 is a flowchart illustrating the merchandise registration processing according to the present embodiment, and FIG. 6 is a flowchart illustrating the error detection processing according to the present embodiment. The error detection processing is performed in parallel with the merchandise registration processing.

When a customer checks out using the self-register 11, the customer places a basket containing merchandise to be purchase on the merchandise placing table 21.

For example, when the touch panel 27 is touched by the customer and an operation starts, the CPU 40 of the self-register 11 starts the merchandise registration processing illustrated in the flowchart of FIG. 5. First, the CPU 40 clears a currently-stored registered merchandise list so as to register the data of the merchandise to be purchased by the customer (Act A1).

The CPU 40 displays a screen for notifying the customer of an instruction (operation sequence) for the merchandise registration processing on the touch panel 27, and starts registration of merchandise information (merchandise sale data) (Act A2). Then, the CPU 40 determines whether or not the merchandise registration processing is completed, that is, whether or not all merchandise has been registered (Act A3). If the determination is positive (Yes in Act A3), the process proceeds to Act A6. If the determination is negative (No in Act A3), the CPU 40 operates to accept registration of the merchandise information according to an operation of the customer (Act A4).

For example, the customer takes out the merchandise placed on the merchandise placing table 21, and makes the barcode of the merchandise face the scanner 30 so that the barcode can be read. Alternatively, the customer moves the hand scanner 31 so as to face the barcode attached to the merchandise and read the barcode.

When the barcode is input by the scanner 30 or the hand scanner 31, the CPU 40 records data such as a merchandise code, a merchandise name, a unit price, and input time which correspond to the the time the scanner 30 or the hand scanner 31 read the barcode of the merchandise, in an entry of the registered merchandise list (Act A5). Then, the process returns to Act 3. If it is determined that the merchandise registration processing is completed (Yes in Act A3), the CPU 40 operates to display a merchandise confirmation screen that indicates the merchandise information recorded in the registered merchandise list, on the touch panel 27 (Act A6). More specifically, the merchandise confirmation screen indicates information of a merchandise name, a unit price, a merchandise image, or the like which relate to the merchandise.

The customer places the merchandise for which the barcode scanning is performed on the merchandise placing table 22.

Meanwhile, the CPU 40 performs movement detection processing, while the customer completes the merchandise registration processing, as described above (Act B1). The movement detection processing determines whether the customer moves the merchandise for the barcode scanning. During the movement detection processing, the CPU 40 determines whether a motion of the hand (and the arm) of the customer holding the merchandise is detected within a predetermined detection range by the motion sensor 38.

The predetermined detection range includes a range in which, for example, the customer performs the work for scanning of the barcode attached to the merchandise using the scanner 30 or the hand scanner 31.

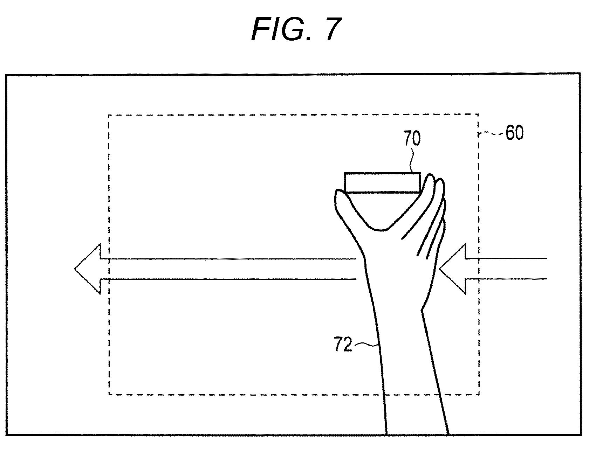

FIG. 7 illustrates a state in which a customer moves merchandise for the barcode scanning.

In FIG. 7, a region 60 is a detection range in which the motion of the merchandise moved by the customer is detectable. For example, the customer makes the barcode on merchandise 70 face the scanner 30, and then moves the customer's arm 72 that holds the merchandise 70. That is, the customer moves the merchandise 70 from the outside of the region 60 to a position close to the scanner 30, and moves the merchandise 70 out of the region 60 onto the merchandise placing table 22, as shown by arrows of FIG. 7.

When movement of the merchandise 70 and the arm 72 into the region 60 is detected by the motion sensor 38 (Yes in Act B2), the CPU 40 records the detection time as the movement detection time in an entry of the detection list. When no movement is detected by the motion sensor, the process returns to Act B1.

Thereafter, when the movement of the merchandise 70 and the arm 72 out of the region 60 is detected by the motion sensor 38 (Yes in Act B3), the CPU 40 records the detection time as the movement completion time in an entry of the detection list. When no movement is detected (No in Act B3), Act B3 is repeated.

In the present embodiment, it is also possible to detect the motion of the customer (and the merchandise) based on the video image obtained with the camera 39 instead of the motion detection by the motion sensor 38. For example, the CPU 40 determines a region of the video image which changes with passage of time from the video image. That is, a region corresponding to the merchandise 70 and the arm 72 of the customer holding the merchandise 70 is determined from the video image. The CPU 40 sets the time when the region corresponding to the merchandise 70 and the arm 72 enters the region 60, which is the detection range of the motion sensor 38, as the movement detection time, sets the time when the region of the merchandise 70 and the arm 72 comes out from the region 60 as the movement completion time, and records the movement detection time and the movement completion time in an entry of the detection list.

When the motion of the merchandise to be placed on the merchandise placing table 22 is detected (when it is determined that the movement of the merchandise is completed), the CPU 40 determines whether merchandise information (merchandise sale data) corresponding to the detected motion is registered in the registration merchandise list, based on the movement completion time (ActB4).

For example, the CPU 40 searches for an entry that includes input time that fits within a predetermined time period (for example, 2 sec) before the movement completion time, among entries recorded in the registered merchandise list. When there is an entry including such input time (Yes in Act B5), the CPU 40 determines that the merchandise information corresponding to the motion of the merchandise has been registered.

In this case, the CPU 40 does not output the error notification. When the customer is going to purchase multiple pieces of merchandise, the customer repeats the work of transferring merchandise from the basket to the merchandise placing table 21, scanning the barcode, and placing the merchandise on the merchandise placing table 22. When the barcode is correctly read, an error is not notified to the customer. Accordingly, as long as the merchandise is moved out of the motion detection range after the barcode scanning, the customer can carry out the barcode scanning of another piece of merchandise. That is, the customer can perform the barcode scanning even before the previously-scanned merchandise is placed on the merchandise placing table 22. Accordingly, it is possible to perform efficient merchandise registration processing.

Particularly, when two customers cooperatively do the work for reading the barcode of the merchandise and then the work of putting the merchandise into a shopping bag, it is possible to perform more efficient work. For example, when one customer can continuously perform the work of putting the merchandise on the merchandise placing table 22, since a detected weight of the merchandise on the merchandise placing table 22 may fluctuate, a conventional error detection may need to disable subsequent merchandize registration until the weight is stably detected and confirmed. However, according to the present embodiment, the other customer can continuously perform the work for reading the barcode even while merchandise weight is not stabilizing.

Meanwhile, when it is determined that there is no input time that fits within the time period of the motion detection, in the registered merchandise list(No in Act B5), the CPU 40 determines that the merchandise corresponding to the detected motion has not been registered. That is, the CPU 40 can find out that the merchandise placed on the merchandise placing table 22 was not successfully scanned.

In this case, the CPU 40 outputs an error notification (Act B6), and the process returns to Act B1. For example, the CPU 40 controls the speaker 32 to output a warning sound and operates to display a message or the like on the touch panel 27 which indicates the incomplete reading of the barcode.

In addition, the CPU 40 also outputs the error notification to the store computer 14 or the computer 16. For example, the computer 16 displays an error message which associates the incomplete reading of the barcode with the self-register 11. Based on the error message, an attendant can easily recognize occurrence of an error.

The error notification output from the self-register 11 may include a corresponding transaction number which is recorded in the detection list, the movement detection time, and the movement completion time. In this case, the computer 16 can determine reproduction time of the video image based on the movement detection time and the movement completion time, read video data of the reproduction time from the self-register 11, and reproduce the corresponding video image.

The camera 39 images a range including the merchandise placing table 21 and the merchandise placing table 22. Accordingly, it is possible to review the customer's movement from time when the customer takes out the merchandise from the merchandise placing table 21 to time when the customer places the merchandise on the merchandise placing table 22.

When a weight of the merchandise placed on the merchandise placing table 22 is measured by the weight sensor 44 in a stable state, the CPU 40 determines whether or not the merchandise registration processing is correctly performed based on the weight. That is, the CPU 40 determines whether or not a difference between the sum of standard weights of merchandise recorded in the registered merchandise list and a weight measured by the weight sensor 44 is within an allowable range. As a result of the determination, when the difference is within the allowable range, it is possible to determine that the barcode of the merchandise is correctly read. Meanwhile, when the difference is out of the allowable range, the CPU 40 outputs the error notification to, for example, the store computer 14 or the computer 16.

That is, the error detection processing based on the motion of the merchandise to be placed on the merchandise placing table 22 is performed in parallel with the error detection based on the weight measurement. For that reason, it is possible to perform efficient merchandise registration processing and to perform more reliable error detection.

When the customer finishes reading the barcodes of all merchandise placed on the merchandise placing table 21 (registration end) (Yes in Act A3), the customer instructs payment by performing a touch operation on the touch panel 27. Then, the CPU 40 operates to display a list of merchandise to be purchased, and a list including the total number and the total price on the touch panel 27, according to the instruction from the customer, based on the data recorded in the registered merchandise list (Act A6). In addition, the CPU 40 operates to display images (still images) of the customer captured when the customer carries out the work for the barcode scanning of each item of merchandise, in the displayed list. Each of the still images in the list is extracted from the video image between the movement detection time and the movement completion time that are recorded in the detection list. Since the movement detection time and the movement completion time are recorded in the detection list for each item of merchandise, it is possible to extract the still image of each item of merchandise and to display each still image in the list.

In the aforementioned embodiment, a detection function of detecting the motion of the merchandise is provided in the self-register 11, but an electronic apparatus (merchandise information processing apparatus) different from the self-register 11 can also perform the detection function. In the same manner as described above, the electronic apparatus includes the motion sensor 38 or the camera 39, and the self-register 11 detects a motion of the merchandise that is being moved towards the merchandise placing table 22 after the barcode reading. When the motion is detected, the electronic apparatus interrogates the self-register 11 to determine whether or not merchandise corresponding to the motion has been registered in the self-register 11, based on the movement completion time.

The self-register 11 searches for input time within the predetermined time period before the movement completion time, in the registered merchandise list, in response to an inquiry from the electronic apparatus. When there is no input time within the predetermined time period, that is, when no merchandise information corresponding to the motion detected by the electronic apparatus is registered, the self-register 11 informs the electronic apparatus of occurrence of an error. The electronic apparatus outputs an error notification to the customer through display or sound and to the computer 16 (attendant terminal), in response to the information from the self-register 11. As a result, it is possible to obtain the same effects as in a case in which the self-register 11 has the detection function.

In addition, in the aforementioned description, it is assumed that the video data of the video image obtained with the camera 39 is recorded in the self-register 11, but the video data may be recorded in a different external device. The external device may be, for example, the store computer 14, the computer 16 (attendant terminal), or a server (computer) for recording the video data. The video data recorded in the external device can be reproduced by designating an arbitrary time (start time and end time).

According to at least one embodiment described above, while performing an operation to read a barcode attached to merchandise using the scanner 30 or the hand scanner 31, the self-register 11 performs an operation to detect a motion of the merchandise that is being moved towards the merchandise placing table 22, and determines whether or not the merchandise corresponding to the detected motion has been registered. When it is determined that the merchandise corresponding to the detected motion has been registered, an error is not communicated to a customer. Accordingly, even before a first merchandise is placed on the merchandise placing table 22, the customer can read the barcode of a second merchandise and place the second merchandise on the merchandise placing table 22. That is, it is possible to perform more efficient merchandise registration processing (input of merchandise sale data), compared to detection of the error solely based on weight of merchandise placed on the merchandise placing table 22.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A merchandise information processing apparatus, comprising:
a motion detector configured to detect motion of merchandise that is being moved by a user for detection of an identification code placed thereon or a body part of the user that is holding the merchandise; and
a processor configured to access a registration list of merchandise that has been registered through detection of identification codes, and to determine whether the merchandise that has undergone the motion detection is included in the registration list.

2. The merchandise information processing apparatus according to claim 1, wherein
the registration list includes one or more entries containing a detection time when an identification code of corresponding merchandise was detected, and
determining whether the merchandise that has undergone the motion detection is included in the registration list includes determining whether, in the registration list, there is a detection time that is between a start time when the merchandise or the body part entered a predetermined detection region of the motion detector and an end time when the merchandise and the body part moved out of the predetermined detection region.

3. The merchandise information processing apparatus according to claim 2, further comprising:
a code detector configured to detect identification codes placed on merchandise, wherein
the predetermined detection region overlaps a code detection region of the code detector.

4. The merchandise information processing apparatus according to claim 1, further comprising:
a code detector configured to detect identification codes placed on merchandise; and
a storage unit for storing the registration list.

5. The merchandise information processing apparatus according to any one of claims 1 to 4, further comprising:
a display, wherein
the processor is further configured to cause the display to display an error message when it is determined that the merchandise that has undergone the motion detection is not included in the registration list.

6. The merchandise information processing apparatus according to any one of claims 1 to 5, further comprising
a camera configured to capture an image of the merchandise moved by the user and the body part of the user holding the merchandise; and
a storage unit for storing data of an image captured by the camera, wherein
the processor is further configured to output the data of the image stored in the storage unit to an external device.

7. The merchandise information processing apparatus according to claim 6, further comprising:
a display, wherein
the processor is further configured to cause the display to display information of the merchandise that has undergone the motion detection, together with the image captured by the camera.

8. The merchandise information processing apparatus according to claim 7, wherein
the registration list includes one or more entries containing a detection time when an identification code of corresponding merchandise was detected, and
determining that the merchandise that has undergone the motion detection is included in the registration list includes determining whether, in the registration list, there is a detection time that is between a start time when the merchandise or the body part entered a predetermined imaging region of the camera and an end time when the merchandise and the body part moved out of the predetermined image region.

9. A method for processing a merchandise purchase transaction, comprising:
detecting motion of merchandise that is being moved by a user for detection of an identification code placed thereon or a body part of the user that is holding the merchandise;
accessing a registration list of merchandise that has been registered through detection of identification codes; and
determining whether the merchandise that has undergone the motion detection is included in the registration list.

10. The method according to claim 9, wherein
the registration list includes one or more entries containing a detection time when an identification code of the corresponding merchandise was detected, and
determining that the merchandise that has undergone the motion detection is included in the registration list includes determining whether, in the registration list, there is a detection time that is between a start time when the merchandise or the body part entered a predetermined detection region of the motion detector and an end time when the merchandise and the body part moved out of the predetermined detection region.

11. The method according to claim 9 or 10, wherein
the predetermined detection region is a region that overlaps a code detection region of a code detector to detect identification codes of merchandise.

12. The method according to any one of claims 9 to 11, further comprising:
generating sound indicating an error when it is determined that the merchandise that has undergone the motion detection is not included in the registration list.
